# FASCICULE DE BREVET EUROPEEN

(11) **EP 0 820 704 B1**
(45) Date de publication et mention de la délivrance du brevet: **21.06.2006**
(21) Numéro de dépôt: 96202077.2
(22) Date de dépôt: 22.07.1996
(51) Int. Cl.: A23L 1/32, A23L 1/187, A23P 1/16, A23C 9/154

(54) **Produit à base d'oeuf de longue conservation et procédé de préparation**
Lagerstabiles Produkt auf Basis von Eiern, und Verfahren seiner Herstellung
Shelf-stable egg-based product and process for its preparation

(43) Date de publication de la demande: 28.01.1998
(73) Titulaire: SOCIETE DES PRODUITS NESTLE S.A., 1800 Vevey (CH)
(72) Inventeur: Bisson, Jean-Pierre, 14000 Caen (FR); Beyer, Hans-Joachim, 84577 Tuessling (DE); Petermann, Robert, 14100 Lisieux (DE)
(74) Mandataire: Thomas, Alain

(56) Documents cités:
- EP-A- 0 179 946
- EP-A- 0 443 219
- EP-A- 0 560 429
- FR-A- 2 296 376
- US-A- 1 373 651
- US-A- 3 475 180
- US-A- 4 369 196
- US-A- 4 877 625
- PATENT ABSTRACTS OF JAPAN vol. 008, no. 199 (C-242), 12 Septembre 1984 & JP 59 091842 A (SUKEGAWA YUKIE), 26 Mai 1984,
- PATENT ABSTRACTS OF JAPAN vol. 012, no. 082 (C-481), 15 Mars 1988 & JP 62 215356 A (MIYOSHI OIL & FAT CO LTD), 22 Septembre 1987,
- DATABASE FSTA INTERNATIONAL FOOD INFORMATION SERVICE (IFIS), FRANFURT/MAIN, DE AN 80(03):P0569, 1978 G. DE SOUZA: "Preliminary Trials for Manufacture of a long-lifs dessert" XP002018043 & BOLETIM DO INSTITUTO DE TECNOLOGIA DE ALIMENTOS, no. 60, 1978, BRAZIL, pages 61-70,
- PATENT ABSTRACTS OF JAPAN vol. 004, no. 050 (C-007), 16 Avril 1980 & JP 55 021781 A (YAMADA TSUNEKI), 16 Février 1980,
- MCCANCE & WIDDOWSON: "The Composition of Foods" , THE ROYAL SOCIETY OF CHEMISTRY , GB XP002018042 * Pages 74, 76, 78, 80 *

## Description

L'invention se rapporte à un produit à base d'oeuf stérilisé, de fonctionnalité analogue à celle d'un produit de même nature contenant de l'oeuf n'ayant pas subi de traitement thermique. Elle concerne notamment un produit à base d'oeuf susceptible de gélifier par traitement thermique, et donc apte à la confection de produits alimentaires gélifiés.

On utilise souvent les oeufs pour leurs excellentes propriétés fonctionnelles, par exemple de gélification, d'émulsification et d'aptitude au battage, pour leur goût et leur couleur. On sait que les produits alimentaires à base d'oeuf ne sont pas exempts de risques microbiologiques, du fait que les oeufs peuvent contenir des germes sporulés et des salmonelles. Les protéines d'oeuf perdent habituellement leurs propriétés fonctionnelles, en particulier leur aptitude à la gélification dans les conditions de traitement thermique qui seraient nécessaires à l'élimination des salmonelles et des spores résistantes. C'est pourquoi, les ovoproduits industriels sont généralement pasteurisés, ce qui n'élimine pas tous les risques. Du fait des risques résiduels, l'emploi des oeufs est limité, par exemple dans les desserts réfrigérés de longue conservation.

Le problème à la base de la présente invention est la mise à disposition d'un produit à base d'oeuf entier, de blanc d'oeuf ou de jaune d'oeuf, qui aurait la fonctionnalité désirée, en particulier l'aptitude à l'émulsification et au foisonnement ainsi que la faculté de gélifier à la cuisson, pour pouvoir être utilisé dans la préparation de produits alimentaires tout en étant hygiénique et en particulier de convenir à la préparation de produits alimentaires cuits gélifiés.

On connait différents procédés d'hygiénisation de produits à base d'oeuf. Selon EP-A-179946, par exemple, on dilue des jaunes d'oeuf avec de l'eau, on acidifie la dispersion à pH 2-5,7, puis on la stérilise à ultra haute température (UHT), dans des conditions évitant toute coagulation apparente.

Selon EP-A-281431, on prépare une crème anglaise par mélange de lait, de concentré pâteux d'oeuf entier, de sucre et de stabilisants, puis on stérilise le mélange à 100-160° C, on le refroidit par détente, on l'homogénéise aseptiquement et on le conditionne aseptiquement.

En particulier, le produit selon l'invention est gélifié par traitement thermique en présence de calcium.

Dans le contexte de l'invention, l'expression "physiquement et microbiologiquement stable" signifie que le produit, aussi bien en tant que tel que dans un produit fini, par exemple gélifié, est stable pendant une longue durée sur le plan microbiologique et qu'il n'y a pas de séparation de phases ou de décantation à l'entreposage.

Dans un mode de réalisation particulier, le produit selon l'invention contient un dérivé de calcium de qualité alimentaire stérilisé, notamment un sel minéral ou organique, par exemple le lactate, le gluconate, le chlorure ou un mélange de ces sels, à raison de 0,05 à 3 % en poids, de préférence de 0,1 à 0,8 % en poids.

L'invention concerne également un procédé de préparation d'un produit à base d'oeuf stérilisé de longue conservation, qui constitue ou qui est susceptible de constituer par reconstitution en présence d'un milieu aqueux, un mélange colloïdal physiquement et microbiologiquement stable d'oeuf, de protéines lactiques riches en caséine et d'hydrates de carbone et que les protéines lactiques suppléent aux propriétés fonctionnelles de l'oeuf dans ses applications, caractérisé par le fait que l'on mélange une base lactique riche en caséine, des hydrates de carbone et de l'oeuf liquide, puis que l'on stérilise le mélange par traitement à ultra haute température qu'on le refroidit, qu'on y ajoute un dérivé de calcium ayant été préalablement stérilisé et qu'on le traite thermiquement pour effectuer sa gelification.

Dans le contexte de l'invention, on entend par base lactique riche en caséine toute matière première d'origine lactique contenant des protéines lactiques, riche en caséine. On peut utiliser toute matière première contenant de la caséine, pourvu que la caséine soit susceptible de réagir avec le calcium à la chaleur pour former un gel. La caséine est de préférence native, c'est à dire essentiellement sous forme de micelle intacte. On peut citer comme matière première préférée un lait en poudre, enrichi de concentrat de protéine lactique, provenant notamment de l'ultrafiltration de lait écrémé suivie de diafiltration (ultrafiltration avec lavage à l'eau) ou de la microfiltration de lait écrémé, le cas échéant séché, par exemple par

EP-A-0 560 429 a trait à une crème fouettable riche en graisse et non-lactique sous forme d'émulsion contenant des composants de l'oeuf et du caséinate de sodium. La présence d'agents épaississants/gélifiants est nécessaire.

FR-A-2 296 376 concerne un procédé de préparation d'un flan aux oeufs utilisant moins d'oeuf qu'il n'était nécessaire traditionnellement. La présence d'agents épaississants/gélifiants du genre gomme alimentaire ou extrait d'algues est requise.

JP 59 091842 A se rapporte à un procédé de préparation d'un mélange de caillé de soja et de caillé lactique contenant du blanc d'oeuf dans lequel la teneur en protéines est augmentée par addtition de poudre de lait écrémé, et dans lequel on coagule ce mélange en présence de calcium et de glucono delta lactone.

US-A-4 877 625 concerne un procédé de production de flan dessert dans lequel les conditions de stérilisation évitent la précipitation des composants de l'oeuf L'utilisation d' agents épaississants est nécessaire.

EP-A-0 179 946 a trait, en particulier à l'exemple 5, à une crème/flan contenant du jaune d'oeuf préparée par stérilisation séparée d'une base lactique qui contient de l'amidon, par stérilisation séparée du jaune d'oeuf à un pH bas, par mélange aseptique et remplissage dans des pots. On ajoute de l'amidon et des maltodextrines à la phase lactique.

L'invention concerne un produit à base d'oeuf stérilisé de longue conservation, qui est gélifié par traitement thermique, qui est physiquement et microbiologiquement stabe, caracterisé par le fait qu'il comprend:
une base lactique protéique riche en caséine représentant 55 à 80% en poids,
des hydrates de carbone representant 3 à 20% en poids,
de l'oeuf et un sel de calcium stérilisé de qualité alimentaire
par pulvérisation. En variante, on peut utiliser comme source de caséine du babeurre, de préférence doux, ultrafiltré ou non ou un caséinate autre que le caséinate de calcium. La base lactique représente avantageusement 55 à 80 % en poids et les protéines lactiques 1 à 15 %, de préférence environ 6 % en poids du mélange.

L'oeuf liquide utilisable dans le procédé de l'invention peut être un jaune d'oeuf, un blanc d'oeuf, un mélange de jaune et de blanc ou un oeuf entier sous forme liquide, ayant été préalablement pasteurisé. On peut utiliser de l'oeuf de coule fraîche, de l'oeuf mûri, c'est à dire conservé à température de réfrigération, par exemple à environ 4° C, pendant une durée allant jusqu'à plusieurs jours. On peut utiliser un mélange de blanc et de jaune d'oeuf ayant été mûris séparément. Selon la teneur en oeuf du mélange, de 1 à 45 % en poids, de préférence 10 à 30 % en poids, le gel obtenu après réaction à chaud avec le calcium aura une texture plus lisse, mais moins ferme et un goût amélioré, dans le sens d'une augmentation de cette teneur.

Les hydrates de carbone utilisables dans le procédé de l'invention sont notamment le saccharose, le lactose, lorsque l'on désire utiliser le produit selon l'invention pour fabriquer un aliment sucré ou, s'il s'agit d'un aliment salé la maltodextrine, de préférence à équivalent dextrose bas, par exemple < 20, seuls ou en mélange. Les hydrates de carbone représentent 3 à 20 % et de préférence environ 10 % en poids du mélange.

Pour mettre en oeuvre le procédé, on mélange les composants solides dans du lait entier ou plus ou moins écrémé sous agitation jusqu'à solubilisation complète, on ajuste le cas échéant le pH à une valeur allant de 6,5 à 7,5, puis on préchauffe le mélange à l'aide d'un échangeur à plaques à une température inférieure ou égale à 95° C, de préférence à une température inférieure ou égale à 70° C.

Le traitement de stérilisation par UHT peut être conduit par injection directe de vapeur ou de manière indirecte, par exemple au moyen d'un échangeur à plaques. L'appareillage peut comprendre, par exemple, en ligne, une pompe positive, une buse d'injection de vapeur, un tube d'attente, une soupape de contre-pression, un refroidisseur par détente et un refroidisseur à plaques avec circulation d'eau glacée.

La stérilisation a lieu de préférence à 138° C-150° C pendant 4-25 s, la température la plus basse étant généralement associée à la durée la plus longue et la température la plus élevée à la durée la plus courte.

Après refroidissement par détente, de préférence sous vide, on peut homogénéiser le mélange dans un homogénéisateur à 1 ou 2 effets, de préférence, pour un effet à une pression de 75 à 300 bar (P1) ou pour deux effets de 75/15 bar à 300/60 bar (P1/P2 avec un rapport P2/P1 égal ou proche de 0,2), puis refroidir à température ambiante. Bien entendu, toutes les opérations ultérieures à la stérilisation sont effectuées de manière aseptique. L'homogénéisation peut être optionnelle en fonction des applications. Par exemple, dans le cas où le traitement thermique a lieu par injection directe de vapeur, il se produit un effet de sonication qui peut s'avérer insuffisant pour l'homogénéité désirée et il est alors préférable de procéder à une homogénéisation.

Selon un mode de réalisation préféré du procédé, on introduit dans le mélange refroidi une solution aqueuse d'un dérivé de calcium préalablement stérilisée. On peut utiliser à cet effet tout dérivé de calcium de qualité alimentaire, notamment un sel minéral ou organique, par exemple le lactate, le gluconate, le chlorure ou un mélange de ces sels, à raison de 0,05 à 3 % en poids, de préférence de 0,1 à 0,8 % en poids. La solution peut être stérilisée par traitement thermique direct ou indirect ou par microfiltration.

Le mélange stérile ainsi obtenu peut être conditionné de manière aseptique dans des emballages préalablement stérilisés et constituer un aliment gélifiable prêt à cuire, par exemple pour la préparation ménagère ou industrielle.

Pour la préparation industrielle, on peut également ajouter le sel de calcium au produit stérilisé en quantité efficace en vue du traitement ultérieur de gélification.

En variante, on peut sécher le mélange en question, par exemple par pulvérisation dans une tour de séchage dans des conditions modérées n'induisant pas de gélification des protéines de lait. On peut également sécher le mélange protéines du lait/oeufs séparément, puis mélanger à sec le ou les sel (s) de calcium et les cas échéant d'autres composants déshydratés.

Une fois séché et le cas échéant additionné des autres ingrédients déhydratés de la recette, le mélange peut être reconstitué avec un milieu aqueux, puis subir le traitement thermique de gélification.

L'invention concerne également un procédé de fabrication d'un aliment gélifié ou comprenant une garniture gélifiée, caractérisé par le fait qu'après y avoir ajouté le cas échéant un sel de calcium, on traite thermiquement le produit précédent de manière à former un gel, le cas échéant en présence d'autres composants à titre de réceptacle, d'inclusions, d'annexes ou d'ingrédients d'aromatisation.

Ainsi, le produit selon l'invention peut être utilisé comme ingrédient de base dans tout aliment comprenant l'emploi en mélange de lait, d'oeuf et d'hydrates de carbone dans le but de former un gel par cuisson. On peut citer les préparations culinaires salées pour flan, omelettes, quiches ou sauces ou sucrées pour pâtisserie, notamment pour gâteaux, crèmes, ou flans.

Le produit selon l'invention peut être utilisé sous forme liquide ou sous forme déshydratée en poudre, reconstituable en présence de liquide.

Dans un mode de réalisation particulier, de fabrication de dessert cuit au four de conservation à l'état réfrigéré, le produit selon l'invention, mis en oeuvre sous forme liquide, sert de base d'oeuf à laquelle on ajoute la quantité utile de sel de calcium, par exemple dans un mélangeur dynamique.

Après remplissage de pots, on peut les présceller, en laissant la possibilité aux gaz de s'échapper, on les cuit au four, par exemple dans un four à infra-rouges à convection ou dans un bain-marie entre 100 et 250° C pendant 20 à 90 min, on les scelle définitivement et on les refroidit.

Le traitement thermique de stérilisation des oeufs en mélange avec les protéines du lait détruit les propriétés fonctionnelles des protéines d'oeuf. Toutefois, la préparation d'un aliment, par exemple un flan ou une mousse reste possible grâce à l'exploitation des propriétés gélifiantes ou d'aptitude au foisonnement et à l'émulsification des protéines de lait qui prennent le relai des protéines d'oeuf. Dans le cas particulier d'un aliment gélifié, les protéines lactiques suppléent aux protéines d'oeuf par leur aptitude à gélifier en présence de calcium et avec apport de chaleur.

Les exemples ci-après illustrent l'invention. Dans ceux-ci, les parties et pourcentages sont pondéraux, sauf indication contraire.

### Exemple 1

On mélange de l'oeuf liquide de coule fraîche et du lait écrémé dans une cuve sous agitation, puis on y introduit du saccharose et le cas échéant de la poudre de lait écrémé ou un concentré de protéines totales de lait à 60 % de protéines obtenu par ultrafiltration et séchage, au moyen d'un mélangeur à turbine jusqu'à dissolution. On pompe ensuite le mélange au moyen d'une pompe positive vers un échangeur à plaques où il est préchauffé à une température inférieure ou égale à 70° C. Après injection directe de vapeur, on maintient le liquide à 145° C pendant 8 s, on le refroidit ensuite, d'abord par détente sous vide à 70° C, puis au moyen d'un échangeur à plaques avec circulation d'eau glacée à 4-6° C et on l'entrepose dans une cuve stérile, les opérations suivant le traitement thermique de stérilisation ayant lieu de manière aseptique.

Les proportions des ingrédients (%) et le pH du mélange avant stérilisation sont indiqués dans le tableau 1 ci-après.

**Tableau 1**

| **Blanc d'oeuf** | **Oeuf entier, blanc/ jaune 70/30** | **Jaune d'oeuf** | **Saccharose** | **Poudre de lait écrémé** | **Concen tré de protéines totales de lait** | **Lait écrémé** | **pH avant stérilisation** |
|---|---|---|---|---|---|---|---|
| 26 | - | - | 9 | 3 | - | 62 | 6,89 |
| - | 26 | - | 9 | 3 | - | 62 | 6,78 |
| - | 13 | - | 9 | 3 | - | 75 | 6,65 |
| | 26 | - | 9 | - | 3 | 62 | 7,00 |
| - | 26 | - | 9 | - | 5 | 60 | 6,75 |
| - | 26 | - | 13 | - | 5 | 56 | 6,40 |
| - | 26 | - | 9 | 3 | 5 | 57 | 6,64 |
| - | 26 | - | 11 | - | 3 | 60 | 6,57 |
| - | 26 | - | 11 | - | 7 | 57 | 6,56 |
| - | 13 | - | 11 | - | 5 | 71 | 6,63 |
| - | 32 | - | 11 | - | 5 | 52 | 6,82 |

Dans tous les cas, le traitement de stérilisation ne conduit à aucune coagulation visible ni déstabilisation physique.

Les produits sont exempts de germes mésophiles après 3 j à 30° C, exempts de germes coliformes après 24 h à 30° C et exempts de spores mésophiles après 3 j à 30° C. A titre de comparaison, les mêmes produits n'ayant pas subi de traitement de stérilisation possèdent des germes mésophiles et coliformes à raison de 2. 10² à 2. 10⁸ germes/ml. Les mêmes produits pasteurisés à 80° C pendant 10 min ont de 4. 10² à 1.10⁵ spores mésophiles/ml.

Les produits servent de base à la fabrication d'aliments sucrés.

### Exemple 2

On procède comme à l'exemple 1, mais avec des oeufs liquides mûris 5 j à 4° C. Les ingrédients et leurs proportions (%) ainsi que le pH du mélange avant stérilisation sont indiqués dans le tableau 2 ci-après.

**Tableau 2**

| **Blanc d'oeuf** | **Oeuf entier, blanc/ jaune 70/30** | **Jaune d'oeuf** | **Saccharose** | **Concen tré de protéines totales de lait** | **Lait écrémé** | **pH avant stérilisation** |
|---|---|---|---|---|---|---|
| - | 32 | - | 11 | 5 | 52 | 6,88 |
| 22,4 | - | 9,6 | 11 | 5 | 52 | 6,90 |

Les propriétés physiques et la qualité microbiologique des produits sont semblables à celles obtenues dans le cas de l'exemple 1.

### Exemple 3

On procède comme à l'exemple 1, à partir d'un mélange contenant 26 % d'oeuf entier, 11 % de saccharose, 5% de concentré de protéines totales de lait (contenant 60 % de protéines) et 58 % de lait écrémé, mélange dont le pH avant traitement UHT est 6,8. On varie les conditions du traitement thermique UHT et, après refroidissement par détente sous vide à 70° C, on procède le cas échéant à une homogénéisation à 70° C. Les conditions opératoires du procédé sont indiquées dans le tableau 3 ci-après.

**Tableau 3**

| **Température du traitement UHT (° C)** | **Durée du traitement UHT (s)** | **Homogénéisation, 1 effet (pression, bar)** | **Homogénéisation, 2 effets (pression, 1er effet/2ème effet, bar)** |
|---|---|---|---|
| 140 | 5 | - | - |
| 140 | 15 | - | - |
| 143 | 5 | - | - |
| 143 | 15 | - | - |
| 143 | 10 | 75 | - |
| 143 | 10 | 150 | - |
| 143 | 10 | 250 | - |
| 143 | 10 | - | 75/15 |
| 143 | 10 | - | 150/30 |
| 143 | 10 | - | 250/50 |

La qualité microbiologique des produits est semblable à celle obtenue dans le cas de l'exemple 1. Le pouvoir de gélification est par ailleurs amélioré dans le cas où l'on homogénéise.

### Exemple 4

On procède comme à l'exemple 1, à celà près que les produits servent de bases d'aliments salés. Les ingrédients et leurs proportions (%) sont indiqués dans le tableau 4 ci-après.

**Tableau 4**

| **Oeuf entier** | **Concen tré à 60 % de protéines totales de lait** | **Concen tré à 75 % de protéines totales de lait** | **Chlorure de sodium** | **Maltodextrine (à équival ent dextrose 19)** | **Maltodextrine (à équival ent dextrose 12)** | **Lait écrémé** |
|---|---|---|---|---|---|---|
| 32 | 5 | - | 0,88 | 7 | - | 55,12 |
| 32 | - | 5 | - | - | 11 | 52 |
| 32 | - | 5 | 0,88 | 5 | - | 55,12 |
| 32 | - | 5 | - | - | 7 | 56 |

Les propriétés physiques et la qualité microbiologique des produits sont semblables à celles obtenues dans le cas de l'exemple 1.

On utilise les produits obtenus comme base pour fabriquer une quiche lorraine en ajoutant 0,07 % de Ca sous forme d'une solution de gluconate/lactate juste avant la cuisson. La texture et le goût de la quiche sont semblables à ceux d'une quiche traditionnnelle.

### Exemple 5

A partir d'un mélange préparé selon l'exemple 1, on fabrique une poudre par séchage par pulvérisation dans une tour de séchage à turbine dans les conditions de séchage suivantes:
- température d'entrée d'air 180-200° C,
- température de sortie d'air 85-90° C.

Une fois reconstitué dans l'eau à l'extrait sec choisi, le mélange peut être utilisé comme dans l'exemple 1.

### Exemple 6

A un mélange préparé selon l'exemple 3, stérilisé à 143° C/15 s, n'ayant pas subi d'homogénéisation, on injecte en ligne, de manière stérile, 1,8 % d'une solution aqueuse à 10 % de chorure de calcium préalablement stérilisée par microfiltration, puis on l'entrepose dans une cuve stérile en vue d'un emploi ultérieur.

On fabrique ensuite des flans aux oeufs en dosant la préparation précédente dans des pots, en scellant partiellement les pots, en les cuisant dans un four à air chaud à 110° C pendant 75 min, puis en scellant les pots de manière définitive. Après refroidissement, on examine la fermeté du gel par pénétrométrie avec un analyseur de texture de modèle TAXT 2 ® (TA Instruments), l'analyse de la courbe de compression donnant la valeur du module de Young (fermeté de gel exprimée en Pa). La valeur obtenue est 1638 Pa.

### Exemple 7

On procède comme à l'exemple 6, sauf que l'on dose la quantité nécéssaire efficace de solution de chlorure de calcium dans les pots juste avant la cuisson au four. Le flan obtenu est tout à fait comparable à celui obtenu selon l'exemple 6. Le gel a une fermeté dépendante de la quantité de calcium ajoutée.

### Exemple 8

On procède comme à l'exemple 7, sauf que les conditions de stérilisation sont 140° C/10 s. A titre de sel de calcium, on emploie le chorure ou un mélange gluconate/lactate (Gluconal-Cal ®, Akzo Nobel) à différentes concentrations, comme indiqué au tableau 5 ci-après. Après cuisson, les gels ont les fermetés indiquées au tableau 5 ci-après.

**Tableau 5**

| **Sel de calcium** | **Concentration (%)** | **Fermeté du gel (Pa)** |
|---|---|---|
| CaCl₂ (solution aqueuse à 10%) | 2,2 | 2581 |
| CaCl₂ (solution aqueuse à 10 %) | 2,6 | 3532 |
| CaCl₂ (solution aqueuse à 10 %) | 3 | 4916 |
| CaCl₂ (solution aqueuse à 10%) | 4 | 6460 |
| Mélange de gluconate/lactate de Ca (solution aqueuse à 27,5 %) | 2,2 | 2094 |
| Mélange de gluconate/lactate de Ca (solution aqueuse à 27,5 %) | 2,6 | 3136 |
| Mélange de gluconate/lactate de Ca (solution aqueuse à 27,5 %) | 3 | 3643 |
| Mélange de gluconate/lactate de Ca (solution aqueuse à 27,5 %) | 4 | 5294 |

## Revendications

1. Produit à base d'oeuf stérilisé de longue conservation, qui est gélifié par traitement thermique, qui est physiquement et microbiologiquement stable, **caractérisé par le fait qu'**il est constitué:
d'une base lactique protéique riche en caséine représentant 55 à 80% en poids,
d'hydrates de carbone représentant 3 à 20 % en poids,
d'oeuf et d'un sel de calcium de qualité alimentaire stérilisé.

2. Produit selon la revendication 1, dans lequel le sel de calcium est notamment le lactate, le gluconate, le chlorure ou un mélange de ces sels, à raison de 0,05 à 3 % en poids, de préférence de 0,1 à 0,8 % en poids.

3. Produit selon la revendication 1 ou 2, **caractérisé par le fait que** la base lactique représente 55 à 80 % en poids et les protéines lactiques 1 à 15 %, de préférence environ 6 % en poids du mélange.

4. Procédé de préparation d'un produit à base d'oeuf stérilisé de longue conservation constitué ou susceptible de constituer par reconstitution en présence d'un milieu aqueux, un mélange colloïdal physiquement et microbiologiquement stable d'oeuf, de protéines lactiques riches en caséine et d'hydrates de carbone et que les protéines lactiques suppléent aux propriétés fonctionnelles de l'oeuf dans ses applications, **caractérisé par le fait que** l'on mélange une base lactique riche en caséine, des hydrates de carbone et de l'oeuf liquide, puis que l'on stérilise le mélange par traitement à ultra haute température, qu'on le refroidit, qu'on y ajoute un dérivé de calcium ayant été préalablement stérilisé et qu'on le traite thermiquement pour effectuer sa gélification.

5. Procédé selon la revendication 4, **caractérisé par le fait que** l'on utilise à titre de base lactique riche en caséine une matière première contenant de la caséine susceptible de réagir avec le calcium à la chaleur pour former un gel, notamment un lait écrémé en poudre enrichi de concentrat de protéines lactiques.

6. Procédé selon la revendication 4, **caractérisé par le fait que** la base lactique représente 55 à 80 % en poids et les protéines lactiques 1 à 15 %, de préférence environ 6 % en poids du mélange.

7. Procédé selon la revendication 4, **caractérisé par le fait que** l'on utilise un jaune d'oeuf, un blanc d'oeuf, un mélange de jaune et de blanc ou un oeuf entier sous forme liquide, ayant été préalablement pasteurisé et le cas échéant mûri, à raison de 1 à 45 % en poids, de préférence 10 à 30 % en poids, du mélange.

8. Procédé selon la revendication 4, **caractérisé par le fait que** les hydrates de carbone utilisés sont notamment le saccharose, le lactose, un polymère de glucose et leurs mélanges lorsque l'on désire utiliser le produit selon l'invention pour fabriquer un aliment sucré ou, s'il s'agit d'un aliment salé, la maltodextrine, de préférence à équivalent dextrose < 20, seuls ou en mélange et que les hydrates de carbone représentent 3 à 20 % et de préférence environ 10 % en poids du mélange.

9. Procédé selon la revendication 4, **caractérisé par le fait que** l'on mélange les composants solides dans du lait sous agitation jusqu'à solubilisation complète, on ajuste le cas échéant le pH à une valeur allant de 6,5 à 7,5, on préchauffe le mélange à une température inférieure ou égale à 70° C, on le stérilise par UHT par injection directe de vapeur ou de manière indirecte, par exemple au moyen d'un échangeur à plaques, que la stérilisation a lieu de préférence à 138° C-150° C pendant 4-25 s et qu'on le refroidit par détente.

10. Procédé selon la revendication 4, **caractérisé par le fait, qu'**après refroidissement par détente, on homogénéise le mélange dans un homogénéisateur à 1 ou 2 effets, puis on le refroidit à température ambiante, toutes les opérations ultérieures à la stérilisation étant effectuées de manière aseptique.

11. Procédé selon la revendication 4, **caractérisé par le fait que** l'on introduit dans le mélange refroidi une solution aqueuse d'un dérivé de calcium préalablement stérilisée, notamment le lactate, le gluconate, le chlorure ou un mélange de ces sels, à raison de 0,05 à 3 % en poids et de préférence de 0,1 à 0,8 % en poids et que l'on conditionne le tout de manière aseptique dans des emballages préalablement stérilisés.

12. Procédé selon la revendication 4, **caractérisé par le fait que** l'on ajoute le sel de calcium au produit stérilisé en quantité efficace au moment du traitement ultérieur de gélification.

13. Procédé selon la revendication 4, **caractérisé par le fait que** l'on sèche le mélange, notamment par pulvérisation dans une tour de séchage dans des conditions modérées n'induisant pas de gélification des protéines du lait, puis que l'on mélange à sec le ou les sel(s) de calcium et le cas échéant d'autres composants déshydratés.

## Claims

1. Shelf-stable sterilised egg-based product which is gelled by heat treatment and which is physically and microbiologically stable, **characterized in that** it consists of :
a proteinic lactic base rich in casein representing 55 to 80 % by weight,
carbohydrates representing 3 to 20 % by weight,
egg and a sterilised food-grade calcium salt.

2. Product according to claim 1, wherein the calcium salt is in particular the lactate, gluconate, chloride or a mixture of these salts, at a rate of 0.05 to 3 % by weight, preferably from 0.1 to 0.8% by weight.

3. Product according to claim 1 or 2, **characterized in that** the lactic base represents 55 to 80 % by weight and the lactic proteins 1 to 15 %, preferably approximately 6 % by weight of the mixture.

4. Process for preparing a shelf-stable sterilised egg-based product formed or likely to be formed by reconstituting, in the presence of an aqueous medium, a physically and microbiologically stable colloidal mixture of egg, lactic proteins rich in casein and carbohydrates and where the lactic proteins supplement the functional properties of egg in its applications, **characterized in that** a lactic base rich in casein is mixed with carbohydrates and liquid egg, the mixture is then sterilised by ultra high temperature treatment, it is cooled, and a calcium derivative is added thereto having been previously sterilised and heat treatment is carried out in order to produce its gelation.

5. Process according to claim 4, **characterized in that**, as a lactic base rich in casein, a starting material is used containing casein capable of reacting with calcium on heating so as to form a gel, in particular a powdered skimmed milk enriched with a concentrate of lactic proteins.

6. Process according to claim 4, **characterized in that** the lactic base represents 55 to 80 % by weight and the lactic proteins 1 to 15 %, preferably approximately 6 % by weight of the mixture.

7. Process according to claim 4, **characterized in that** egg yolk, egg white, a mixture of egg yolk and egg white or a whole egg in liquid form is used, that has been previously pasteurised and optionally ripened, at the rate of 1 to 45% by weight, preferably 10 to 30% by weight of the mixture.

8. Process according to claim 4, **characterized in that** the carbohydrates used are in particular sucrose, lactose, a glucose polymer and mixtures thereof when it is desired to use the product according to the invention for producing a sweetened foodstuff, or, if a savoury foodstuff is concerned, maltodextrin, preferably with a dextrose equivalent < 20, alone or mixed, and that the carbohydrates represent 3 to 20 % and preferably approximately 10 % by weight of the mixture.

9. Process according to claim 4, **characterized in that** the solid components are mixed with milk with stirring until complete solubilisation, the pH is adjusted where necessary to a value of between 6.5 and 7.5, the mixture is preheated to a temperature of less than or equal to 70°C, it is sterilised by UHT by direct steam injection or indirectly, for example by means of a plate exchanger, that sterilisation takes place preferably at 138°C - 150°C for 4-25 s and the mixture is cooled by expansion.

10. Process according to claim 4, **characterized in that**, after cooling by expansion, the mixture is homogenised in a single- or two-stage homogeniser, and is then cooled to ambient temperature, all the operations subsequent to sterilisation being carried out aseptically.

11. Process according to claim 4, **characterized in that** an aqueous solution of a previously sterilised calcium derivative is introduced into the cooled mixture, in particular calcium lactate, gluconate, chloride or a mixture of these salts, at a rate of 0.05 to 3 % by weight and preferably 0.1 to 0.8 % by weight, and everything is packaged aseptically in previously sterilised packages.

12. Process according to claim 4, **characterized in that** the calcium salt is added to the sterilised product in an effective quantity at the time of the subsequent gelation treatment.

13. Process according to claim 4, **characterized in that** the mixture is dried, in particular by spraying into a drying tower under moderate conditions not inducing gelation of the milk proteins, and the calcium salt or salts and optionally other dehydrated components is or are then mixed in.

## Patentansprüche

1. Durch thermische Behandlung geliertes und physikalisch und mikrobiologisch stabiles haltbares Produkt auf der Basis von sterilisiertem Ei,
**dadurch gekennzeichnet, dass** es besteht aus:
einer an Casein reichen Milchproteinbasis, die 55 bis 80 Gew.-% darstellt,
Kohlenhydraten, die 3 bis 20 Gew.-% darstellen,
Ei und sterilisiertem Calciumsalz von Nahrungsmittelqualität.

2. Produkt nach Anspruch 1, bei dem das Calciumsalz insbesondere Lactat, Gluconat, Chlorid oder eine Mischung dieser Salze in einem Anteil von 0,05 bis 3 Gew.-%, vorzugsweise 0,1 bis 0,8 Gew.-%, ist.

3. Produkt nach Anspruch 1 oder 2, **dadurch gekennzeichnet, dass** die Milchbasis 55 bis 80 % und die Milchproteine 1 bis 15 %, vorzugsweise etwa 6 %, vom Gewicht der Mischung darstellt.

4. Verfahren zur Herstellung eines haltbaren Produkts auf der Basis von sterilisiertem Ei, das eine physikalisch und mikrobiologisch stabile colloidale Mischung von Ei, an Casein reichen Milchproteinen und Kohlenhydraten bildet oder durch Rekonstituierung in Gegenwart eines wässrigen Mediums bilden kann, wobei die Milchproteine die funktionellen Eigenschaften von Ei bei seinen Verwendungen ersetzen, **dadurch gekennzeichnet, dass** man eine an Casein reiche Milchbasis, Kohlenhydrate und Flüssigei mischt, dann die Mischung durch Behandlung mit Ultrahochtemperatur sterilisiert, sie kühlt, ihr ein zuvor sterilisiertes Calciumderivat zusetzt und sie zur Durchführung ihrer Gelierung thermisch behandelt.

5. Verfahren nach Anspruch 4, **dadurch gekennzeichnet, dass** man als an Casein reiche Milchbasis ein Ausgangsmaterial verwendet, das Casein enthält, das in der Hitze mit Calcium reagieren kann, um ein Gel zu bilden, insbesondere mit Milchproteinkonzentrat angereichertes Magermilchpulver.

6. Verfahren nach Anspruch 4, **dadurch gekennzeichnet, dass** die Milchbasis 55 bis 80 % und die Milchproteine 1 bis 15 %, vorzugsweise 6 %, vom Gewicht der Mischung darstellen.

7. Verfahren nach Anspruch 4, **dadurch gekennzeichnet, dass** man Eigelb, Eiweiß, eine Mischung von Eigelb und Eiweiß oder Vollei in flüssiger Form, das zuvor pasteurisiert und ggf. gereift wurde, in einem Anteil von 1 bis 45 %, vorzugsweise 10 bis 30 %, vom Gewicht der Mischung verwendet.

8. Verfahren nach Anspruch 4, **dadurch gekennzeichnet, dass** die verwendeten Kohlenhydrate insbesondere Saccharose, Lactose, ein Glucosepolymer und ihre Mischungen, wenn man das erfindungsgemäße Produkt zur Herstellung eines süßen Nahrungsmittels verwenden möchte, oder, wenn es sich um ein salziges Nahrungsmittel handelt, Maltodextrin vorzugsweise mit einem Dextroseäquivalent von < 20 allein oder in Mischung sind und dass die Kohlenhydrate 3 bis 20 % und vorzugsweise etwa 10 % vom Gewicht der Mischung darstellen.

9. Verfahren nach Anspruch 4, **dadurch gekennzeichnet, dass** man die festen Bestandteile in Milch unter Rühren bis zur vollständigen Solubilisierung mischt, den pH-Wert ggf. auf einen Wert von 6,5 bis 7,5 einstellt, die Mischung auf eine Temperatur unter oder gleich 70°C vorerhitzt, sie durch UHT mit Hilfe von direkter oder indirekter Dampfeinspritzung beispielsweise mit Hilfe eines Plattenwärmetauschers sterilisiert, dass die Sterilisierung vorzugsweise bei 138°C - 150°C während 4-25 s stattfindet und dass man die Mischung durch Entspannung kühlt.

10. Verfahren nach Anspruch 4, **dadurch gekennzeichnet, dass** man nach Abkühlung durch Entspannung die Mischung in einem 1-oder 2-stufigen Homogenisator homogenisiert und dann die Mischung auf Raumtemperatur kühlt, wobei alle auf die Sterilisierung folgenden Arbeitsgänge keimfrei durchgeführt werden.

11. Verfahren nach Anspruch 4, **dadurch gekennzeichnet, dass** man in die gekühlte Mischung eine wässrige Lösung eines zuvor sterilisierten Calciumderivats, insbesondere Lactat, Gluconat, Chlorid oder eine Mischung dieser Salze, in einem Anteil von 0,05 bis 3 Gew.-%, vorzugsweise 0,1 bis 0,8 Gew.-%, einführt und dass man das Ganze in zuvor sterilisierten Verpackungen keimfrei verpackt.

12. Verfahren nach Anspruch 4, **dadurch gekennzeichnet, dass** man das Calciumsalz dem sterilisierten Produkt in wirksamer Menge zum Zeitpunkt der späteren Gelierungsbehandlung zusetzt.

13. Verfahren nach Anspruch 4, **dadurch gekennzeichnet, dass** man die Mischung insbesondere durch Sprühtrocknung in einem Trockenturm bei schonenden Bedingungen trocknet, die insbesondere keine Gelierung der Proteine der Milch verursachen, und dass man dann das oder die Calciumsalze und ggf. andere dehydratisierte Bestandteile trocken mischt.
